# EUROPEAN PATENT SPECIFICATION

(11) **EP 2 482 407 B1**
(45) Date of publication and mention of the grant of the patent: **11.03.2015**
(21) Application number: 12000285.2
(22) Date of filing: 18.01.2012
(51) Int. Cl.: H02G 13/00, F03D 11/00

(54) **Lightning protection device and wind turbine**
Blitzschutzvorrichtung und Windturbine
Dispositif de protection contre la foudre et éolienne

(30) Priority: 31.01.2011 CN 201110034134
(43) Date of publication of application: 01.08.2012
(73) Proprietor: Sinovel Wind Group Co., Ltd, Haidian District, Beijing 100872 (CN)
(72) Inventor: Yan, Meng, Haidian District Beijing 100872 (CN); Lu, Jizhuang, Haidian District Beijing 100872 (CN); Zhang, Qin, Haidian District Beijing 100872 (CN); Liu, Zuohui, Haidian District Beijing 100872 (CN)
(74) Representative: Pfenning, Meinig & Partner GbR

(56) References cited:
- EP-A2- 1 568 883
- CN-A- 101 420 103
- DE-A1-102007 052 525
- GB-A- 2 469 520

## Description

### FIELD OF THE TECHNOLOGY

The present invention relates to a lightning protection and discharging structure technology, in particular to a lightning protection device and a wind turbine.

### BACKGROUND

The lightning phenomenon of the nature has immeasurable damage to high-altitude buildings and equipment, and particularly damage to electronic control systems is more serious. Therefore, a lightning protection device needs to be set for protecting objects which need lightning protection.

Generally, lightning is prevented from directly attacking buildings, structures, electric networks or electric devices in a main mode of arranging lightning rods, lightning belts, lightning nets and lightning wires at the tops of the buildings.

The interstitial point discharge phenomenon is an effective measure of lightning protection, the interstitial point discharge phenomenon achieves the lightning protection effect by controlling the clearance distance between a lightning protection object top conductor and a discharging point, the clearance distance needs to be controlled in a proper range, too large clearance distance affects the lightning protection effect of point discharge, and too short clearance distance causes contact between the discharging point and a lightning protection object so that the lightning protection effect cannot be achieved.

When relative movement exists between the discharging point and the lightning protection body, how to conveniently debug the valid clearance distance between the discharging point and the lightning protection body in order to acquire effective lightning protection effect and protect the discharging point is an important problem and is also a difficult problem.

Particularly in wind power generation, the wind turbine mainly comprises a wind wheel, a generator, an iron tower and a yawing device. The iron tower is a truss for supporting the wind wheel and the generator and is generally built with relatively high height, and the height of certain iron towers reaches more than 100 meters, so the iron tower is particularly important for lightning protection.

Generally, the lightning protection device can be arranged on the cabin rotating part of the yawing device at the top of the iron tower, so that a certain clearance distance is kept between the discharging point of the lightning protection device and a tower top flange to realize effective lightning protection. When wind power generation equipment executes yawing movement, the cabin rotates relative to the tower top flange, so relatively fixed clearance distance between the discharging point of the lightning protection device and the tower top flange is difficult to keep, and is the problem and difficulty yet to be solved in the prior art.

D1 (DE 10 2007 052525 A1) discloses a lightning protection device comprising a machine body fixing frame connected and fixed with a lightning protection body comprising a current collector and a carbon brush for arresting a lightning in a wind power plant comprising at least one rotor blade that is coupled to a hub, a slow shaft that is coupled to the hub in a substantially rotationally fixed manner, a bearing that rotatably mounts the shaft relative to a main frame which accommodates at least one means for converting mechanical power, and a tower that is connected in a conducting manner to the ground. The rotor blade has means for introducing the lightning and means for conducting the lightning. The means for conducting the lightning are in conducting contact with a conducting transmission unit which is connected in a conducting manner to the tower and is designed as a sliding contact that is fitted with a slipring and a brush.

D2 (GB 2469520 A) discloses a wind turbine hub and nacelle assembly including lightning conducting means for conducting lightning between the hub and the nacelle, the hub being mounted for rotation relative to the nacelle and being adapted to support turbine blades, the hub including a hub conductor for connection to a turbine blade supported by the hub, the lightning conducting means including a conductive track and a terminal which

confront and are displaceable relative to each other, one of the conductive track and the terminal being mounted on the hub and being electrically connected to the hub conductor and the other of the conductive track and the terminal being mounted on the nacelle, the terminal including a terminal main body which is spaced from the conductive track and a sacrificial conductive terminal extension extending from the terminal main body towards the track.

D3 (EP 1568883 A2) discloses a wind energy generator. The wind energy generator has a propeller driven generator in a housing that is mounted on a pillar. The system is protected against lightning strikes by a conductor system coupled to ground. The system uses a slip ring and brush to connect between rotary and stationary parts.

D4 (CN 101420103 A) discloses an anti-shielding failure lightning rod and installation tool thereof, which does not require a user to install the lightning rod by himself. The lightning rod comprises a rod of lightning rod, a clamp, a balance device and a needle bar rack,

None of D1, D2, D3 or D4 discloses the method for keeping the relatively fixed clearance distance between the discharging point of the lightning protection device and the tower top flange, which could realize effective lightning protection and prevent thunder and lightning from damaging wind turbine equipment.

### SUMMARY

The present invention provides a lightning protection device and a wind turbine for realizing effective lightning protection and preventing thunder and lightning from damaging wind turbine equipment.

One aspect of the present invention provides a lightning protection device according to claim 1, which comprises a machine body fixing frame, a discharging support frame and a guiding elastic piece, wherein the machine body fixing frame is connected and fixed with a machine body of a lightning protection body; a current collection claw, a guide wheel and a carbon brush are fixedly connected to the discharging support frame, face the side wall of a top conductor at top portion of the lightning protection body and extend out from the discharging support frame, the guide wheel and the carbon brush extend out from the discharging support frame to prop against the side wall of a top conductor at top portion of the lightning protection body, and the length of the current collection claw extending out from the discharging support frame is smaller than the extending length of the guide wheel; and two ends of the guiding elastic piece are connected with the machine body fixing frame and the discharging support frame respectively, and the relative distance between the machine body fixing frame and the discharging support frame is adjusted, so that the guide wheel is propped against the side wall of a top conductor at top portion of the lightning protection body.

The lightning protection device provided by the present invention can ensure the clearance distance between the current collection claw and the side wall of a top conductor at the top portion of the lightning protection body and achieve effective lightning protection effect.

Another aspect of the present invention also provides a wind turbine, which comprises a wind wheel, a generator, an iron tower and a yawing device, and also comprises the lightning protection device provided by the present invention, wherein the machine body fixing frame is fixedly connected with the cabin rotating part of the yawing device, and the guide wheel and the carbon brush fixed on the discharging support frame are propped against the inner wall of the tower top flange of the iron tower.

The lightning protection device of the present invention is adopted in the wind turbine provided by the present invention, and the discharging clearance distance between the current collection claw and the conductor can be automatically adjusted through the guide wheel, so effective lightning protection is achieved, and safe operation of wind power generation equipment is ensured.

### BRIEF DESCRIPTION OF THE DRAWINGS

Figure 1 is a structural schematic diagram of a lightning protection device provided by embodiment II of the present invention;

Figure 2 is a structural schematic diagram of the lightning protection device provided by embodiment II of the present invention in a wind turbine.

Marks of the drawing:

| | | |
|---|---|---|
| 1, machine body fixing frame; | 2, spring; | 3, guide rod; |
| 4, discharging support frame; | 5, screw; | 6, guide wheel; |
| 7, sliding block; | 8, sliding groove; | 9, current collection claw; |
| 10, carbon brush; | 11, guiding elastic piece; | 12, tower top flange; |
| 13, cabin rotating part; | 14, first screw; | 15, second screw; |
| 16, unthreaded hole; | 17, threaded hole. | |

### DETAILED DESCRIPTION

In order that the purposes, the technical schemes and the advantages of the embodiments of the present invention are clearer, the technical schemes in the embodiments are clearly and completely described in combination with the drawings in the embodiments. Obviously, the described embodiments are a part of embodiments of the present invention, not all embodiments. Based on the embodiments in the present invention described here and other teachings in the specification, a person skilled in the art can acquire other embodiments and modify the present invention without creative work, all those modifications and variations are within the range protected by the present invention.

Embodiment I

The embodiment I of the present invention provides a lightning protection device. The lightning protection device is applied to a lightning protection body, the lightning protection body comprises a machine body and a top conductor, and generally, the top conductor can rotate relative to the machine body. For example, the yawing device of a wind turbine can rotate relative to the iron tower, wherein the iron tower is also named as a tower frame or a tower tube.

The lightning protection device comprises a machine body fixing frame, a discharging support frame and a guiding elastic piece. The machine body fixing frame is fixedly connected with the machine body of the lightning protection body, the lightning protection device is fixed on a certain part of the lightning protection body, and generally, the machine body fixing frame is fixedly connected with the machine body at the top of the lightning protection body.

A current collection claw, a guide wheel and a carbon brush are fixedly connected to the discharging support frame, face the side wall of the top conductor of the lightning protection body and extend out from the discharging support frame; the guide wheel and the carbon brush extend out from the discharging support frame to prop against the side wall of the top conductor of the lightning protection body; and the length of the current collection claw extending out from the discharging support frame is smaller than the extending length of the guide wheel. The top conductor is a conductive component such as a component made of metal.

The carbon brush in the embodiment is generally made of pure carbon and coagulating agent and has a square shape or other suitable shapes, and a lead is led out of the carbon brush. The current collection claw is also called as a lightning protection arc striking plate in a shape of plate, one side of which is serrated, wherein the serrated side faces the side wall of the top conductor of the lightning protection body. The current collection claw can be made of any conductive metal such as copper or iron, preferably stainless steel. The current collection claw can also be a component of any other shape with a convex point, and the convex point faces the side wall of the top conductor of the lightning protection body. The carbon brush can be connected with a grounding wire, and the lightning is conducted to the ground through the grounding wire. Similarly, the current collection claw can also be provided with a grounding wire for conducting the lightning to the ground. The grounding wire of the carbon brush and the grounding wire of the current collection claw can be the same one.

The carbon brush of the lightning protection device is in contact with the side wall of the top conductor of the lightning protection body, and the carbon brush can play a role in lightning protection when the lightning current received by the machine body of the lightning protection body is relatively weak or static electricity is generated due to electromagnetic induction, friction and the like. When relatively strong lightning current is received, because the lightning protection capability of the instantaneous lightning protection passing current of the carbon brush is limited, the relatively strong lightning current can perform point discharge through the assisted current collection claw, most lightning is further quickly guided onto the current collection claw in short time, and good lightning protection effect is achieved. Therefore, the lightning protection device can play double protection through the carbon brush and the current collection claw.

Two ends of the guiding elastic piece are connected with the machine body fixing frame and the discharging support frame respectively, and the relative distance between the machine body fixing frame and the discharging support frame is adjusted, so that the guide wheel is propped against the side wall of the top conductor at top portion of the lightning protection body.

According to the technical scheme, the lightning protection device is generally arranged at the top of the lightning protection body, and the lightning protection device is fixedly connected with a frame at the top of the lightning protection body through the machine body fixing frame.

The current collection claw, the guide wheel and the carbon brush are connected to the discharging support frame, the guide wheel and the carbon brush extend out of the discharging support frame in certain length to prop against the side wall of the top conductor at top portion of the lightning protection body, and the length of the current collection claw extending out from the discharging support frame is smaller than the extending length of the guide wheel, so a certain clearance is kept between the current collection claw and the side wall of the top conductor at top portion of the lightning protection body; and the clearance is the clearance distance required for lightning discharge. The clearance distance in a proper range can play an effective point discharge lightning protection role, too large clearance distance cannot play an effective lightning protection role, and the clearance distance is determined according to the required lightning protection grade, generally several millimeters; the higher the lightning protection grade is, the shorter the clearance distance is. But if the clearance distance is too short, the current collection claw can easily get in contact friction with the side wall of the top conductor at top portion of the lightning protection body and even deformation, and the point of the current collection claw can be damaged, so that the point discharge lightning protection effect is affected; and the clearance distance in certain embodiments of the present invention is 1 to 5 millimeters, for example, about 2 millimeters.

The guiding elastic piece is arranged between the machine body fixing frame and the discharging support frame, and keeps certain pre-tightening force; and the relative distance between the machine body fixing frame and the discharging support frame is adjusted by elastic deformation of the guiding elastic piece, so that a tight contact between the guide wheel on the discharging support frame and the side wall of the top conductor at top portion of the lightning protection body all the time.

Under the condition of relative displacement between the lightning protection device and the lightning protection body, the relative distance between the machine body fixing frame and the discharging support frame is adjusted by elastic deformation of the guiding elastic piece, and a tight contact between the guide wheel on the discharging support frame and the side wall of the top conductor at top portion of the lightning protection body can still be ensured, so that the discharging clearance distance is kept unchanged.

The lightning protection device provided by the embodiment of the invention can ensure effective clearance distance between the discharging point and the lightning protection body, realizing automatic adjustment of the clearance distance of the discharging point in relative movement of the lightning protection body and the discharging point to achieve effective lightning protection effect, and thus can protect the discharging point from being damaged so as to achieve self protecting and effective lightning protection effects.

The guiding elastic piece is connected between the machine body fixing frame and the discharging support frame, multiple implementation modes are adopted for keeping certain relative movement and elasticity, and preferable embodiments are provided below.

Embodiment II

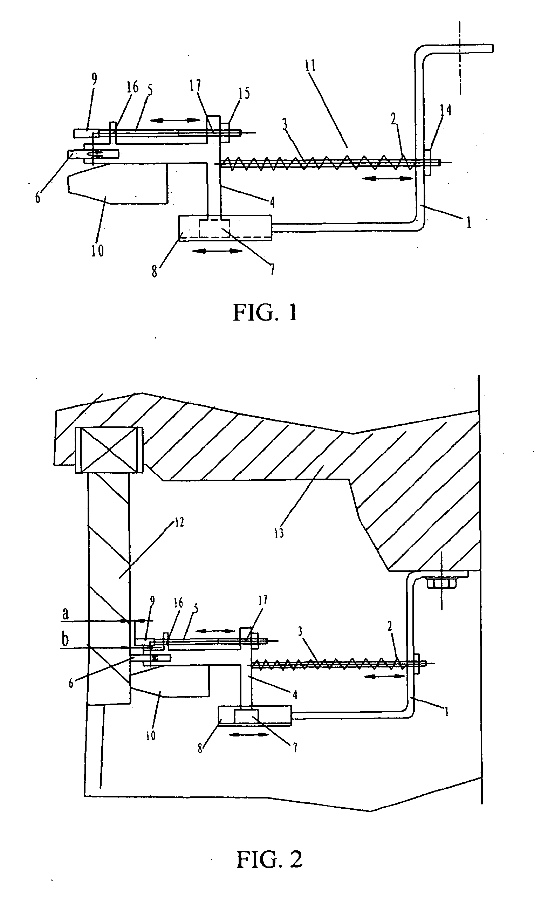

Figure 1 is a structural schematic diagram of a lightning protection device provided by an embodiment II of the present invention. As shown in Figure 1, the lightning protection device comprises a machine body fixing frame 1, a discharging support frame 4 and a guiding elastic piece 11.

The machine body fixing frame 1 is fixedly connected with a machine body of a lightning protection body. A current collection claw 9, a guide wheel 6 and a carbon brush 10 are fixedly connected to the discharging support frame 4, face the side wall of the top conductor at top portion of the lightning protection body and extend out from the discharging support frame 4, the guide wheel 6 and the carbon brush 10 extend out from the discharging support frame 4 to prop against the side wall of the top conductor at top portion of the lightning protection body, and the length of the current collection claw 9 extending out from the discharging support frame 4 is smaller than the extending length of the guide wheel 6.

Two ends of the guiding elastic piece I are connected with the machine body fixing frame 1 and the discharging support frame 4 respectively, and the relative distance between the machine body fixing frame 1 and the discharging support frame 4 is adjusted, so that the guide wheel 6 is propped against the side wall of the top conductor at top portion of the lightning protection body t.

The guiding elastic piece I may have different structures as long as it can serve its intended purpose, for example, it can be a spring or a rubber rod. The following scheme is adopted in the embodiment.

The guiding elastic piece 11 specifically comprises a guide rod 3 and a spring 2, the guide rod 3 is arranged between the machine body fixing frame I and the discharging support frame 4, the spring 2 is sleeved over the guide rod 3, and two ends of the spring 2 are connected with the machine body fixing frame 1 and the discharging support frame 4 respectively. The guide rod 3 is used for guiding the relative movement direction between the machine body fixing frame 1 and the discharging support frame 4. Further, one end of the guide rod 3 is fixedly connected with the discharging support frame 4, and the other end of the guide rod 3 passes through a unthreaded hole, such as a through hole, of the machine body fixing frame 1.

Certainly, one end of the guide rod 3 can be fixedly connected with the machine body fixing frame 1, and the other end of the guide rod 3 passes through a hole, such as a through hole, of the discharging support frame 4, not limited to the present embodiment.

By adopting above scheme, the guide rod 3 is able to move through the unthreaded hole formed in the machine body fixing frame or the discharging support frame so as to guide the displacement between the machine body fixing frame and the discharging support frame; and by arranging the spring on the guide rod, the spring generates deformation along the direction of the guide rod, and the stress deformation direction of the spring is ensured, so that the direction of relative movement between the machine body fixing frame and the discharging support frame is more accurate.

Further, one end of the guide rod 3 can also be provided with a guide thread, and the guide rod 3 is tightened and fixed on the machine body fixing frame 1 or the discharging support frame 4 through a first nut 14 and the guide thread.

The objective of adopting above scheme is that the length of the spring on the guide rod can be conveniently adjusted during installation and debugging by arranging the guide thread at one end of the guide rod, and the pre-tightening force of the spring is further adjusted, so that the guide wheel has a proper contact force with the side wall of the top conductor at top portion of the lightning protection body.

Moreover, when the guide wheel is abraded due to long-term service, the length of the guide wheel 6 extending out from the discharging support frame is adjusted by adjusting the screw-in length of the guide thread, for example, the distance b shown in Figure 2, so that the clearance distance between the current collection claw 9 and the side wall of the top conductor at top portion of the lightning protection body is ensured, for example, the distance a shown in Figure 2.

Based on above technical scheme, further, the machine body fixing frame 1 is glidingly connected with the discharging support frame 4. The gliding connection between the machine body fixing frame 1 and the discharging support frame 4 can be realized in different ways. In the embodiment as shown in Figure 1, one end of the machine body fixing frame 1 is provided with a sliding groove 8, one end of the discharging support frame 4 is provided with a sliding block 7, the sliding block 7 is embedded into the sliding groove 8 and slides relatively in sliding groove 8, and the sliding block 7 can be a block or a roller or the like, not limited to the present embodiment.

The sliding groove 8 provides supporting and guiding for the sliding block 7 so as to ensure the stability of forward and back movement of the discharging support frame 4 relative to the machine body fixing frame 1; and lubricating oil can be properly added into the sliding groove to ensure the sliding lubricating property of the sliding block.

Preferably, the sliding groove 8 is oriented parallel to the axis of the guide rod 3, so that resistance when the sliding block 7 slides in the sliding groove 8 can be reduced as much as possible. The sliding groove 8 can be a U-shaped groove or a dovetail groove, and can also be designed into other shapes according to the actual requirement.

Further, the current collection claw can be fixed on the discharging support frame in various forms, preferably in the embodiment, the current collection claw 9 is connected with the discharging support frame 4 via screw and nut, and the discharging support frame 4 facing the side wall of the top conductor at top portion of the lightning protection body is sequentially provided with an unthreaded hole 16 and a threaded hole 17; and the current collection claw 9 is connected with a screw 5, the screw 5 passes through the unthreaded hole 16 and the threaded hole 17, and the screw 5 can also be tightened on the discharging support frame 4 through a second nut 15.

By adopting the above arrangement, the discharging clearance distance between the current collection claw and the side wall of the top conductor at top portion of the lightning protection body is adjusted by adjusting the screw-in length of the screw, and the distance of the discharging clearance is adjusted more conveniently during installation, debugging, maintenance and repair, so that the required lightning protection grade is met.

Optionally, the guiding elastic piece 11 in the embodiment can consists of only a spring 2, and two ends of the spring 2 are connected with the machine body fixing frame 1 and the discharging support frame 4 respectively.

However, when the guide wheel is abraded due to long-term service, the allowed maximum value of the abrasion amount of the guide wheel is the distance that the guide wheel extends out of the outer edge of the discharging support frame, namely the distance b as shown in Figure 2; and when the maximum abrasion amount is reached or approached, the guide wheel needs to be replaced, and the screw-in length of the screw of the current collection claw should be readjusted, so that effective lightning protection clearance distance value is ensured, namely the distance a as shown in Figure 2.

Embodiment III

The embodiment III of the present invention provides a wind turbine, the specific structure of which is shown in Figure 2; and the lightning protection device is arranged at the top of the iron tower of the wind turbine. The wind turbine comprises a wind wheel, a generator, an iron tower and a yawing device, and also comprises the wind turbine lightning protection device of the present invention; and the cabin rotating part of the yawing device is used as a machine body of a lightning protection body and fixedly connected with machine body fixing frame of the lightning protection device, and the tower top flange of the iron tower is used as the top conductor at top portion of the lightning protection body and propped against the guide wheel and the carbon brush fixed on the discharging supporting frame. Because the lightning protection body of the embodiment is rotatable, a grounding wire can be connected to the tower top flange to conduct the electricity of the cabin rotating part into the tower top flange, and then the electricity is conducted to the ground through the grounding wire on the tower top flange.

According to the preferable scheme, the tower top flange 12 is fixed with the cabin rotating part by using a bolt, the machine body fixing frame 1 of the lightning protection device is fixed on the cabin rotating part 13, the discharging support frame 4 is connected with the machine body fixing frame 1 through the guide rod 3, the spring 2 is sleeved on the guide rod 3, the guide wheel 6 and the carbon brush 10 are propped against the tower top flange 12, the guide wheel 6 is in contact with the inner wall of the tower top flange 12, and a certain clearance distance is kept between the current collection claw 9 and the tower top flange 12.

When the wind turbine does not execute yawing movement, the guide wheel is in relatively static contact with the inner wall of the tower top flange, a certain clearance distance is kept between the current collection claw and the tower top flange, and the value of the clearance distance is preset.

When high wind load is borne, the yawing device is started, the whole cabin has certain excursion, the cabin rotating part rotates synchronously, and certain deformation is generated when the wind load is transferred to the tower top flange; and when the inner wall of the tower top flange deflects to the current collection claw, the inner wall of the tower top flange is in contact with the guide wheel, so that the spring is compressed, a discharging support rod drives the current collection claw to move rightwards together, and the damage caused by contact of the inner wall of the tower top flange and the current collection claw is avoided.

When the inner wall of the tower top flange is stressed and deviates from the current collection claw, the discharging support frame drives the guide wheel and the current collection claw to approach the inner wall of the tower top flange under the push action of the elastic force of the guiding elastic piece, and the guide wheel is still in tight contact with the inner wall of the tower top flange, so the clearance distance between the current collection claw and the tower top flange can be kept unchanged.

When the wind turbine executes yawing movement, the guide wheel and the tower top flange generates relative movement, and the guide wheel can rotate around an axle; and because the guide wheel and the tower top flange are in rolling friction, the contact abrasion of the guide wheel can be reduced, and the clearance distance between the current collection claw and the tower top flange is not correspondingly adjusted due to over quick abrasion.

The closer the distance between the current collection claw and the inner wall of the tower top flange is, the better the effect of point discharge is; and if the distance is too short, the current collection claw possibly strikes through the inner wall of the tower top flange or a rotating main shaft, the current collection claw is damaged, the inner wall of the tower top flange possibly generates fine cracks and scars, the fatigue resistance of the tower top flange or the rotating main shaft is further reduced, namely as time goes on, the fine cracks and scars are gradually enlarged, and the tower top flange or the rotating main shaft is directly damaged. Therefore, the distance between the current collection claw and the inner wall of the tower top flange is set at 1 to 5 millimeters in the embodiment, so that the effect of point discharge is ensured, and the current collection claw cannot strike through the inner wall of the tower top flange. The distance between the current collection claw and the inner wall of the tower top flange can be selected according to the actual requirement. When the machining precision of the current collection claw or the tower top flange is relatively low, certain larger distance can be selected, for example, 3 millimeters; and when the machining precision of the current collection claw or the tower top flange is relatively high, certain shorter distance can be selected, for example, 2 millimeters.

Further, the distance between the current collection claw and the inner wall of the tower top flange can be set at 2 millimeters.

Moreover, the distance between the current collection claw and the inner wall of the lower top flange is smaller than the length of the guide wheel extending out from the discharging support frame to prevent the current collection claw from being in contact with the tower top flange due to the abrasion of the guide wheel.

The wind turbine provided by the embodiment can achieve effective lightning protection and ensure safe operation of the wind power generation equipment.
In addition, the lightning protection device can also be arranged on a main frame of the wind turbine. The wind turbine also comprises a main shaft, a main shaft bearing sleeved on the main shaft and the main frame connected with the main shaft bearing, and further comprises the wind turbine lightning protection device of the present invention, wherein the main shaft is a rotatable component. The main shaft is used as the machine body of the lightning protection body and fixedly connected with the machine body fixing frame of the lightning protection device, and the main frame is used as the top conductor at top portion of the lightning protection body and propped against the guide wheel and the carbon brush fixed on the discharging support frame. Therefore, lightning on the main shaft can be guided into the main frame through the lightning protection device, and then the lightning is guided to the ground through a grounding system on the main frame.

## Claims

1. A lightning protection device comprising a machine body fixing frame (I), a discharging support frame (4) and a guiding elastic piece (11), wherein the machine body fixing frame (1) can be connected and fixed with a machine body of a lightning protection body ; a current collection claw (9), a guide wheel (6) and a carbon brush (10) are fixedly connected to the discharging support frame (4), face the side wall of a top conductor at top portion of the lightning protection body and extend out of the discharging support frame (4), the guide wheel (6) and the carbon brush (10) extend out of the discharging support frame (4) to prop against the side wall of the top conductor at top portion of the lightning protection body, and the length of the current collection claw (9) extending out from the discharging support frame (4) is smaller than the extending length of the guide wheel (6), and two ends of the guiding elastic piece (11) are connected with the machine body fixing frame (1) and the discharging support frame (4) respectively, and the relative distance between the machine body fixing frame (1) and the discharging support frame (4) is adjustable, so that the guide wheel (6) can be propped against the side wall of the top conductor at top portion of the lightning protection body.

2. The lightning protection device according to the claim 1 **characterized in that**: the guiding elastic piece (11) comprises a guide rod (3) and a spring (2), wherein the spring (2) is sleeved over the guide rod (3), and the guide rod is arranged between the machine body fixing frame (1) and the discharging support frame (4), and two ends of the spring (2) are connected with the machine body fixing frame (1) and the discharging support frame (4) respectively.

3. The lightning protection device according to the claim 2 **characterized in that**: one end of the guide rod (3) is fixedly connected with the machine body fixing frame (1) or the discharging support frame (4), and the other end of the guide rod (3) passes through an unthreaded hole (16) of the machine body fixing frame (I) or the discharging support frame (4).

4. The lightning protection device according to the claim 3 **characterized in that**: one end of the guide rod (3) is provided with a guide thread, and the guide rod (3) is tightened and fixed on the machine body fixing frame (1) or the discharging support frame (4) through a nut and the guide thread.

5. The lightning protection device according to any one of the claims 1 to 4 **characterized in that** the machine body fixing frame (1) is glidingly connected with the discharging support frame (4).

6. The lightning protection device according to the claim 5 **characterized in that**: one end of the machine body fixing frame (1) is provided with a sliding groove (8), one end of the discharging support frame (4) is provided with a sliding block (7), and the sliding block (7) is embedded into the sliding groove (8) and slides relatively.

7. The lightning protection device according to the claim 6 **characterized in that**: the sliding block (7) is a roller.

8. The lightning protection device according to any one of the claims 1 to 4 **characterized in that**: the current collection claw (9) is connected with the discharging support frame (4) via a screw and nut.

9. The lightning protection device according to the claim 8 **characterized in that**: one end, facing the top conductor at top portion of the lightning protection body, of the discharging support frame (4) is sequentially provided with an unthreaded hole (16) and a threaded hole (17), the current collection claw (9) is connected with a screw (5), and the screw (5) passes through the unthreaded hole (16) and the threaded hole (17).

10. A wind turbine, comprising a wind wheel, a generator, an iron tower and a yawing device, and **characterized by** also comprising the lightning protection device according to any one of the claims 1 to 9, wherein the cabin rotating part (13) of the yawing device is used as the machine body of the lightning protection body and fixedly connected with the machine body fixing frame (1), and a top flange of the iron tower is used as the lightning protection top conductor and propped against the guide wheel (6) and the carbon brush (10) fixed on the discharging support frame (4).

11. The wind turbine according to the claim 10 **characterized in that**: the distance between the current collection claw (9) and the inner wall of the top flange (12) of the iron tower is 1 to 5 millimeters.

12. The wind turbine according to the claim 10 **characterized in that**: the distance between the current collection claw (9) and the inner wall of the top flange (12) of the iron tower is smaller than the length of the guide wheel (6) extending out from the discharging support frame (4).

13. The wind turbine according to the claim 11 **characterized in that**: the distance between the current collection claw (9) and the inner wall of the top flange (12) of the iron tower is 2 millimeters.

14. The lightning protection device according to the claim 1 **characterized in that**: the guiding elastic piece (11) is a spring (2), and two ends of the spring (2) are connected with the machine body fixing frame (1) and the discharging support frame (4) respectively.

15. The lightning protection device according to the claim 6 **characterized in that**: the sliding groove (8) is oriented parallel to the axis of the guide rod (3).

16. The lightning protection device according to the claim 1 **characterized in that**: the current collection claw (9) is provided with a grounding wire and/or the carbon brush (10) is provided with a grounding wire.

## Patentansprüche

1. Blitzschutzgerät, aufweisend einen Maschinenkörper-Befestigungsrahmen (1), einen Entladungsunterstützungsrahmen (4) und ein führendes elastisches Stück (11),
wobei der Maschinenkörper-Befestigungsrahmen (1) mit einem Maschinenkörper eines Blitzschutzkörpers verbunden und befestigt werden kann;
wobei ein Stromkollektorgreifer (9), ein Führungsrad (6) und eine Carbonbürste (10) fest mit dem Entladungsunterstützungsrahmen (4) verbunden sind, der Seitenwand eines oberen Leiters am oberen Abschnitt des Lichtschutzkörpers zugewandt sind und sich aus dem Entladungsunterstützungsrahmen (4) erstrecken, das Führungsrad (6) und die Carbonbürste (10) sich aus dem Entladungsunterstützungsrahmen (4) erstrecken, um sich gegen die Seitenwand des oberen Leiters am oberen Abschnitt des Lichtschutzkörpers abzustützen, und die Länge des Stromkollektorgreifers (9), der sich aus dem Entladungsunterstützungsrahmen (4) hervor erstreckt, kleiner ist, als die Erstreckungslänge des Führungsrads (6), und zwei Enden des führenden elastischen Stücks (11) mit dem Maschinenkörper-Befestigungsrahmen (1) beziehungsweise dem Entladungsunterstützungsrahmen (4) verbunden sind, und der relative Abstand zwischen dem Maschinenkörperbefestigungsrahmen (1) und dem Entladungsunterstützungsrahmen (4) anpassbar ist, so dass sich das Führungsrad (6) gegen die Seitenwand des Oberleiters am oberen Abschnitt des Blitzschutzkörpers abstützen kann.

2. Blitzschutzgerät nach Anspruch 1, **dadurch gekennzeichnet, dass**: das führende elastische Stück (11) einen Führungsstab (3) und eine Feder (2) aufweist, wobei die Feder (2) über den Führungsstab (3) gezogen ist, und der Führungsstab zwischen dem MaschinenkörperBefestigungsrahmen (1) und dem Entladungsunterstützungsrahmen (4) angeordnet ist, und zwei Enden der Feder (2) mit dem Maschinenkörperbefestigungsrahmen (1) beziehungsweise dem Entladungsunterstützungsrahmen (4) verbunden sind.

3. Blitzschutzgerät nach Anspruch 2, **dadurch gekennzeichnet, dass**: ein Ende des Führungsstabs (3) fest mit dem Maschinenkörperbefestigungsrahmen (1) oder dem Entladungsunterstützungsrahmen (4) verbunden ist, und das andere Ende des Führungsstabs (3) durch ein gewindefreies Loch (16) des Maschinenkörperbefestigungsrahmen (1) oder des Entladungsunterstützungsrahmen (4) verläuft.

4. Blitzschutzgerät nach Anspruch 3, **dadurch gekennzeichnet, dass**: ein Ende des Führungsstabs (3) mit einem Führungsgewinde versehen ist, und der Führungsstab (3) auf dem Maschinenkörperbefestigungsrahmen (1) oder dem Entladungsunterstützungsrahmen (4) durch eine Mutter und das Führungsgewinde festgezogen und befestigt ist.

5. Blitzschutzgerät nach einem der Ansprüche 1 bis 4, **dadurch gekennzeichnet, dass**: der Maschinenkörperbefestigungsrahmen (1) mit dem Entladungsunterstützungsrahmen (4) gleitend verbunden ist.

6. Blitzschutzgerät nach Anspruch 5, **dadurch gekennzeichnet dass**: ein Ende des Maschinenkörperbefestigungsrahmens (1) mit einer Gleitrinne (8) versehen ist, wobei ein Ende des Entladungsunterstützungsrahmens (4) mit einem Gleitblock (7) versehen ist, und der Gleitblock (7) in die Gleitrinne (8) eingelassen ist und relativ gleitet.

7. Blitzschutzgerät nach Anspruch 6, **dadurch gekennzeichnet, dass**: der Gleitblock (7) eine Rolle ist.

8. Blitzschutzgerät nach einem der Ansprüche 1 bis 4, **dadurch gekennzeichnet, dass**: der Stromkollektorgreifer (9) mit dem Entladungsunterstützungsrahmen über eine Schraube und Mutter verbunden ist.

9. Blitzschutzgerät nach Anspruch 8, **dadurch gekennzeichnet, dass**: ein Ende, das dem oberen Leiter am oberen Abschnitt des Lichtschutzkörpers zugewandt ist, des Entladungsunterstützungsrahmens (4) der Reihe nach mit einem gewindelosen Loch (16) und einem Gewindeloch (17) ausgestattet ist, der Stromkollektorgreifer (9) mit einer Schraube (5) verbunden ist, und die Schraube (5) durch das gewindelose Loch (16) und das Gewindeloch (17) verläuft.

10. Windturbine, aufweisend ein Windrad, einen Generator, einen Eisenturm und ein Schwenkgerät, und **gekennzeichnet durch** auch aufweisend das Blitzschutzgerät nach einem der Ansprüche 1 bis 9, wobei der Kabinenrotationsteil (13) des Schwenkgeräts als Maschinenkörper des Lichtschutzkörpers verwendet wird und fest mit dem Maschinenkörperbefestigungsrahmen (1) verbunden ist, und eine obere Kante des Eisenturms verwendet wird als Blitzschutzoberleiter und gegen das Führungsrad (6) und die Carbonbürste (10), die auf dem Entladungsunterstützungsrahmen (4) befestigt ist, abgestützt wird.

11. Windturbine nach Anspruch 10, **dadurch gekennzeichnet, dass**: der Abstand zwischen dem Stromkollektorgreifer (9) und der inneren Wand der Oberkante (12) des Eisenturms 1 bis 5 mm ist.

12. Windturbine nach Anspruch 10, **dadurch gekennzeichnet, dass**: der Abstand zwischen dem Stromkollektorgreifer (9) und der inneren Wand der Oberkante (12) des Eisenturms kleiner ist als die Länge des Führungsrads (6), das sich aus dem Entladungsunterstützungsrahmen (4) erstreckt.

13. Windturbine nach Anspruch 11, **dadurch gekennzeichnet, dass**: der Abstand zwischen dem Stromkollektorgreifer (9) und der inneren Wand der Oberkante (12) des Eisenturms 2 mm ist.

14. Blitzschutzgerät nach Anspruch 1, **dadurch gekennzeichnet, dass**: das führende elastische Stück (11) eine Feder (2) ist und zwei Enden der Feder (2) jeweils mit dem Maschinenkörperbefestigungsrahmen (1) und dem Entladungsunterstützungsrahmen (4) verbunden sind.

15. Blitzschutzgerät nach Anspruch 6, **dadurch gekennzeichnet, dass**: die Gleitrinne (8) parallel zur Achse des Führungsstabs (3) orientiert ist.

16. Blitzschutzgerät nach Anspruch 1, **dadurch gekennzeichnet, dass**: der Stromkollektorgreifer (9) mit einem Erdungsdraht versehen ist und/oder die Carbonbürste (10) mit einem Erdungsdraht versehen ist.

## Revendications

1. Dispositif de protection contre la foudre comprenant un cadre de fixation de corps de machine (1), un cadre de support de décharge (4) et une pièce élastique de guidage (11), dans lequel le cadre de fixation de corps de machine (1) peut être relié et fixé à un corps de machine d'un corps de protection contre la foudre ; une griffe de collecte de courant (9), une roue de guidage (6) et un balai en carbone (10) sont reliés fixement au cadre de support de décharge (4), font face à la paroi latérale d'un conducteur supérieur au niveau d'une partie supérieure du corps de protection contre la foudre et s'étendent hors du cadre de support de décharge (4), la roue de guidage (6) et le balai en carbone (10) s'étendent hors du cadre de support de décharge (4) pour s'appuyer contre la paroi latérale du conducteur supérieur au niveau d'une partie supérieure du corps de protection contre la foudre, et la longueur de la griffe de collecte de courant (9) s'étendant hors du cadre de support de décharge (4) est inférieure à la longueur d'extension de la roue de guidage (6), et les deux extrémités de la pièce élastique de guidage (11) sont reliées au cadre de fixation de corps de machine (1) et au cadre de support de décharge (4) respectivement, et la distance relative entre le cadre de fixation de corps de machine (1) et le cadre de support de décharge (4) peut être ajustée de sorte que la roue de guidage (6) puisse être appuyée contre la paroi latérale du conducteur supérieur au niveau de la partie supérieure du corps de protection contre la foudre.

2. Dispositif de protection contre la foudre selon la revendication 1, **caractérisé en ce que** : la pièce élastique de guidage (11) comprend une tige de guidage (3) et un ressort (2), dans lequel le ressort (2) est monté autour de la tige de guidage (3), et la tige de guidage est agencée entre le cadre de fixation de corps de machine (1) et le cadre de support de décharge (4), et les deux extrémités du ressort (2) sont reliées au cadre de fixation de corps de machine (1) et au cadre de support de décharge (4) respectivement.

3. Dispositif de protection contre la foudre selon la revendication 2, **caractérisé en ce que** : une extrémité de la tige de guidage (3) est reliée fixement au cadre de fixation de corps de machine (1) ou au cadre de support de décharge (4), et l'autre extrémité de la tige de guidage (3) passe à travers un trou non fileté (16) du cadre de fixation de corps de machine (1) ou du cadre de support de décharge (4).

4. Dispositif de protection contre la foudre selon la revendication 3, **caractérisé en ce que** : une extrémité de la tige de guidage (3) est pourvue d'un filet de guidage, et la tige de guidage (3) est serrée et fixée sur le cadre de fixation de corps de machine (1) ou sur le cadre de support de décharge (4) par un écrou et le filet de guidage.

5. Dispositif de protection contre la foudre selon l'une quelconque des revendications 1 à 4, **caractérisé en ce que** : le cadre de fixation de corps de machine (1) est relié de manière glissante au cadre de support de décharge (4).

6. Dispositif de protection contre la foudre selon la revendication 5, **caractérisé en ce que** : une extrémité du cadre de fixation de corps de machine (1) est pourvue d'une rainure de coulissement (8), une extrémité du cadre de support de décharge (4) est pourvue d'un bloc coulissant (7), et le bloc coulissant (7) est intégré dans la rainure de coulissement (8) et coulisse par rapport à celle-ci.

7. Dispositif de protection contre la foudre selon la revendication 6, **caractérisé en ce que** : le bloc coulissant (7) est un rouleau.

8. Dispositif de protection contre la foudre selon l'une quelconque des revendications 1 à 4, **caractérisé en ce que** : la griffe de collecte de courant (9) est reliée au cadre de support de décharge (4) par l'intermédiaire d'une vis et d'un écrou.

9. Dispositif de protection contre la foudre selon la revendication 8, **caractérisé en ce que** : une extrémité, qui fait face au conducteur supérieur au niveau d'une partie supérieure du corps de protection contre la foudre, du cadre de support de décharge (4) est pourvue séquentiellement d'un trou non fileté (16) et d'un trou fileté (17), la griffe de collecte de courant (9) est reliée à une vis (5), et la vis (5) passe à travers le trou non fileté (16) et le trou fileté (17).

10. Éolienne, comprenant une hélice, une génératrice, une tour en fer et un dispositif de mouvement de lacet, et **caractérisée en ce qu'**elle comprend également le dispositif de protection contre la foudre selon l'une quelconque des revendications 1 à 9, dans laquelle la partie rotative de cabine (13) du dispositif de mouvement de lacet est utilisée en tant que corps de machine du corps de protection contre la foudre et est reliée fixement au cadre de fixation de corps de machine (1), et un rebord supérieur de la tour en fer est utilisé en tant que conducteur supérieur de protection contre la foudre et est appuyé contre la roue de guidage (6) et le balai en carbone (10) fixés sur le cadre de support de décharge (4).

11. Éolienne selon la revendication 10, **caractérisée en ce que** : la distance entre la griffe de collecte de courant (9) et la paroi interne du rebord supérieur (12) de la tour en fer est de 1 à 5 millimètres.

12. Éolienne selon la revendication 10, **caractérisée en ce que** : la distance entre la griffe de collecte de courant (9) et la paroi interne du rebord supérieur (12) de la tour en fer est inférieure à la longueur de la roue de guidage (6) s'étendant hors du cadre de support de décharge (4).

13. Éolienne selon la revendication 11, **caractérisée en ce que** : la distance entre la griffe de collecte de courant (9) et la paroi interne du rebord supérieur (12) de la tour en fer est égale à 2 millimètres.

14. Dispositif de protection contre la foudre selon la revendication 1, **caractérisé en ce que** : la pièce élastique de guidage (11) est un ressort (2), et les deux extrémités du ressort (2) sont reliées au cadre de fixation de corps de machine (1) et au cadre de support de décharge (4) respectivement.

15. Dispositif de protection contre la foudre selon la revendication 6, **caractérisé en ce que** : la rainure de coulissement (8) est orientée parallèlement à l'axe de la tige de guidage (3).

16. Dispositif de protection contre la foudre selon la revendication 1, **caractérisé en ce que** : la griffe de collecte de courant (9) est pourvue d'un fil de mise à la masse ou le balai en carbone (10) est pourvu d'un fil de mise à la masse.
